# FASCICULE DE BREVET EUROPEEN

(11) **EP 2 455 263 B1**
(45) Date de publication et mention de la délivrance du brevet: **17.07.2013**
(21) Numéro de dépôt: 11188499.5
(22) Date de dépôt: 09.11.2011
(51) Int. Cl.: B60R 25/00

(54) **Dispositif de commande à distance pour véhicule automobile**
Fernbedienungsvorrichtung für Kraftfahrzeug
Remote-control device for an automobile

(30) Priorité: 17.11.2010 FR 1004476
(43) Date de publication de la demande: 23.05.2012
(73) Titulaire: Delphi Technologies, Inc., Troy, MI 48007 (US)
(72) Inventeur: Deroubaix, Nicolas, 93800 Epinay-sur-Seine (FR)
(74) Mandataire: Robert, Vincent

(56) Documents cités:
- EP-A1- 1 777 129
- DE-A1-102007 028 644
- US-A1- 2006 267 744
- US-A1- 2008 079 602

## Description

### DOMAINE TECHNIQUE

La présente invention concerne de manière générale un dispositif de commande à distance pour véhicule. L'invention s'applique plus particulièrement à un dispositif de commande à distance muni d'au moins un organe de commande multifonction pour commander une pluralités de fonctions à distance sur le véhicule.

### ARRIERE-PLAN TECHNOLOGIQUE

De manière générale, les télécommandes d'accès à un véhicule comprennent un nombre limité de boutons pour commander à distance l'ouverture ou la fermeture des ouvrants du véhicule. Le nombre de boutons présents sur de telles télécommandes reste inévitablement restreint en raison de la taille de la télécommande qui doit être petite pour des questions de maniabilité et de transport par l'utilisateur.

Ainsi il est connu de l'art antérieur, notamment du document EP 1 777 129, un système d'accès à distance pour véhicule automobile selon le préambule de la revendication 1 comprenant une télécommande munie de plusieurs boutons et d'un écran d'affichage. L'actionnement de chaque bouton commande une fonction à distance sur le véhicule. Après exécution de la commande, le véhicule transmet en réponse un signal d'acquittement à destination de la télécommande informant de la bonne exécution de la commande. Cette information est alors affichée sur l'écran d'affichage de la télécommande pour avertir l'utilisateur. La communication entre le véhicule et la télécommande est réalisée par une transmission radiofréquence semi-bidirectionnelle. La fréquence de communication est une ultra haute fréquence unique.

Le point faible d'un tel système est la forte dégradation de ses caractéristiques dans le cas d'un bouton multifonction. En effet, dans la mesure où la télécommande reçoit et fournit une information d'acquittement d'une commande à l'utilisateur, lorsqu'un bouton multifonction est utilisé, l'acquittement d'une fonction peut prendre beaucoup plus de temps que prévu. Cela est particulièrement vrai, quand une trame complète d'un signal de commande comprend une unique séquence de réveil.

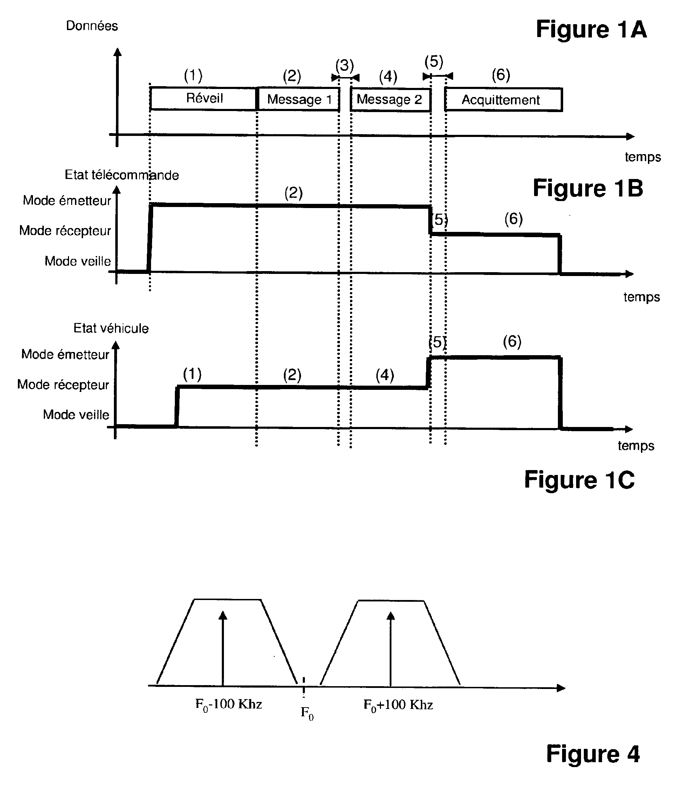

Un autre problème pour de telles télécommandes est la question de la durée de vie de leur batterie. En effet, ces télécommandes sont généralement alimentées par une batterie agencées à l'intérieur du boîtier de la télécommande. En général, le nombre d'octets transmis et le taux de transmission dans les communications avec le véhicule sont souvent conçus de telle manière que la durée de vie de la batterie est optimisée. A cet effet, la trame complète d'un signal de commande, représentée à la figure 1A, est généralement composée d'une séquence de réveil (1) unique, des messages de commande (2, 4) avec un taux de transmission à haute vitesse espacés par un temps de latence (3, 5) réduit au minimum entre chaque message, suivi d'un message d'acquittement (6) des fonctions exécutées. La figure 1B représente les trois modes de fonctionnement de l'émetteur récepteur de la télécommande en corrélation avec les signaux de la trame. Dans un premier mode, l'émetteur récepteur est en veille lorsqu'il ne reçoit ni ne transmet aucun signal ; dans un deuxième mode, l'émetteur est actif lors de la transmission de messages au véhicule ; et dans un troisième mode le récepteur est actif lors de la réception de signaux en provenance du véhicule. La figure 1C représente les trois modes de fonctionnement de l'émetteur récepteur du véhicule. Dans un premier mode, l'émetteur récepteur est en veille lorsqu'il ne reçoit ni ne transmet aucun signal ; dans un deuxième mode, le récepteur est actif lors de la réception des messages en provenance de la télécommande ; et dans un troisième mode l'émetteur est actif lors de la transmission d'un signal d'acquittement à la télécommande.

Ainsi, la communication entre la télécommande et le véhicule se déroule de la manière suivante. Un signal de réveil (1) est transmis par l'émetteur de la télécommande pour réveiller le récepteur d'une unité de contrôle électronique du véhicule. Le premier message (2) est transmis par la télécommande et reçu par le récepteur véhicule. Le premier message reçu est traité (3) par l'unité de contrôle électronique du véhicule. Un deuxième message (4) est transmis par la télécommande, reçu et traité par le récepteur véhicule. L'unité de contrôle bascule du mode récepteur au mode émetteur (5) tandis que dans le même temps la télécommande bascule du mode émetteur au mode récepteur. Un signal d'acquittement (6) est transmis par l'émetteur du véhicule et reçu par la télécommande.

En cas d'utilisation d'un bouton multifonction commandant une première fonction par une pression courte (message 1) et une deuxième fonction par une pression plus longue (message 2), on comprend aisément que le signal d'acquittement lié à l'exécution de la première fonction ne sera transmis qu'après exécution des deux fonctions. De la même manière, pour le cas où le bouton commande trois fonctions liées à des durées croissantes d'activation du bouton, le signal d'acquittement des deux premières fonctions ne sera transmis qu'après exécution de la troisième fonction, i.e. après relâchement du bouton. Un tel décalage dans l'acquittement d'une fonction peut induire l'utilisateur en erreur sur la bonne exécution de la fonction commandée de sorte qu'il double la commande. Ainsi l'utilisateur peut arriver à une situation où il souhaite verrouiller son véhicule, mais en raison du doublement de la commande par celui-ci occasionné par le retard de réception du signal d'acquittement, il verrouille puis déverrouille le véhicule. Il est bien évident qu'un tel risque n'est pas acceptable pour des raisons de sécurité.

Pour résoudre le décalage temporel illustré dans l'exemple ci-dessus entre l'exécution d'une commande et le signal d'acquittement correspondant, des systèmes existants préconisent d'utiliser un « Accès Multiple par Répartition dans le Temps », ou « Time Division Multiple Access » suivant la terminologie anglaise (TDMA). Un accès multiple à répartition dans le temps consiste à utiliser le temps de latence (3) pour commuter les modes émetteur récepteur (5) et transmettre le signal d'acquittement (6) avant de poursuivre avec le message (4). Une telle méthode induit un retard dans l'exécution de la deuxième commande (message 2) et de toutes les commandes successives en raison de l'introduction des étapes (5) et (6) entre chaque commande (ou message).

D'autres solutions sont envisageables, comme par exemple un accès multiple par répartition de fréquence ou selon la terminologie anglaise « Frequency Division Multiple Access » (FDMA), qui permet une communication bidirectionnelle mais qui pour des raisons de coût n'est pas commercialement viable pour des télécommandes d'accès à distance pour véhicule automobile. En effet, le FDMA préconise un découpage en bande de fréquences de manière à attribuer une partie du spectre à chaque communication, ce qui n'est pas sans poser des problèmes tant au niveau de la complexité de l'émetteur récepteur et de l'antenne de la télécommande, qu'au niveau des filtres haute performance requis, ainsi qu'au niveau des risques de diaphonie entre l'émetteur et le récepteur de la télécommande pouvant causer des interférences entre les fréquences utilisées susceptibles d'interrompre la communication avec le véhicule.

### RESUME DE L'INVENTION

Un but de la présente invention est de répondre aux inconvénients mentionnés ci-dessus en fournissant un dispositif de communication à distance ergonomique permettant d'une part l'activation d'un nombre accru de fonction et assurant d'autre part une bonne information de l'utilisateur quant aux fonctions exécutées.

Dans ce but, un premier aspect de la présente invention concerne un dispositif de commande à distance pour véhicule, le dispositif comprenant au moins un organe de commande multifonction pour commander une première fonction à distance sur le véhicule et au moins une deuxième fonction à distance sur le véhicule, des moyens de communication avec le véhicule pour transmettre un signal de commande de l'une et/ou l'autre des fonctions à distance en cas d'activation de l'organe de commande et pour recevoir un signal d'acquittement indiquant l'exécution de l'une et/ou l'autre des fonctions à distance et des moyens de signalisation de la réception d'un signal d'acquittement, caractérisé en ce que les moyens de communication sont des moyens de transmission bidirectionnelle simultanée entre le dispositif de commande à distance et le véhicule utilisant une voie unique de transmission avec modulation par déplacement de fréquence des signaux de commande et d'acquittement échangés. Un tel dispositif de communication à distance permet de concilier l'utilisation d'un bouton multifonction avec une signalisation rapide de la bonne exécution des fonctions commandées. Cela est rendu possible par l'utilisation simultanée des fonctions émetteur et récepteur du dispositif tout en gardant une voie unique de transmission. L'utilisation d'une modulation par décalage de fréquence ou selon la terminologie anglaise Frequency-Shift Keying (FSK), permet de transmettre des informations dans les deux directions simultanément sans présenter les risques liés au FDMA. En outre, l'absence de temps de latence entre un signal de commande et le signal d'acquittement correspondant permet de réduire les temps de communication et donc d'augmenter la durée de vie de la batterie du dispositif de communication à distance.

Selon un mode de réalisation avantageux, le signal d'acquittement est reçu simultanément au signal de commande de la fonction à distance correspondant. Plus particulièrement, le signal d'acquittement est avantageusement décalé d'un bit par rapport au signal de commande correspondant. De cette manière la réception du signal d'acquittement de la fonction commandée est quasi-simultanée avec la transmission et l'exécution de la fonction.

Selon un autre mode de réalisation avantageux, le décalage de fréquence pour la modulation est au moins de 100 KHz. Ainsi, les risques de diaphonie et d'interférences entre les signaux transmis et les signaux reçus sont nettement réduits.

Selon un autre mode de réalisation avantageux, dans lequel les moyens de communication comprennent une partie émettrice et une partie réceptrice, des moyens d'isolation sont prévus entre les parties émettrice et réceptrice. Avantageusement, les moyens d'isolation assurent une isolation supérieure à 30 dB entre les parties émettrice et réceptrice. De cette manière, les risques de diaphonie et d'interférences sont encore réduits.

Selon un autre mode de réalisation avantageux, l'organe de commande multifonction est apte à commander les différentes fonctions à distance suivant son temps d'activation, la première fonction étant commandée par une activation courte et la deuxième fonction étant commandée par une activation intermédiaire plus longue que l'activation courte. On comprendra qu'une activation intermédiaire commandera de préférence la première et la deuxième fonction dans la mesure où le temps mis pour une activation intermédiaire inclut nécessairement le temps mis pour une activation courte. Selon une variante de réalisation, la première fonction est une fonction de verrouillage ou déverrouillage d'au moins un ouvrant du véhicule et la deuxième fonction est une fonction de fermeture ou ouverture des fenêtres correspondant aux ouvrants verrouillés/déverrouillés.

Selon un autre mode de réalisation avantageux, l'organe de commande multifonction est apte à commander en outre une troisième fonction pour un temps d'activation prolongée plus long que le temps d'activation intermédiaire. De la même manière, il est prévu qu'une activation prolongée commandera de préférence les première, deuxième et troisième fonctions dans la mesure où le temps mis pour une activation prolongée inclut les temps pour une activation courte et une activation intermédiaire. Selon une variante de réalisation, la troisième fonction est une fonction de déploiement ou d'escamotage d'un toit rigide du véhicule.

Selon un deuxième aspect, la présente invention concerne un système de commande à distance d'un véhicule comprenant un dispositif de commande à distance selon le premier aspect et un véhicule équipé d'un émetteur récepteur apte à communiquer avec les moyens de communication du dispositif de commande à distance.

Selon un troisième aspect, la présente invention concerne un procédé de communication d'un système de commande à distance selon le deuxième aspect de l'invention, comprenant les étapes consistant à :
- transmettre au véhicule sur une voie unique de transmission un signal de commande d'une première fonction à distance par le biais des moyens de communication du dispositif de commande à distance ;
- transmettre simultanément au dispositif de commande à distance sur la voie unique de transmission un signal d'acquittement de l'exécution de la première fonction modulé par déplacement de fréquence par le biais des moyens de communication du véhicule ;
- signaler l'acquittement de la première fonction au niveau du dispositif de commande à distance ;
- transmettre au véhicule sur la voie unique de transmission un signal de commande d'une deuxième fonction à distance par le biais des moyens de communication du dispositif de commande à distance ;
- transmettre simultanément au dispositif de commande à distance sur la voie unique de transmission un signal d'acquittement de l'exécution de la deuxième fonction modulé par déplacement de fréquence par le biais des moyens de communication du véhicule ;
- signaler l'acquittement de la deuxième fonction au niveau du dispositif de commande à distance.

Selon une variante de mise en oeuvre du procédé, la première fonction à distance fait suite à une activation courte de l'organe de commande du dispositif de commande à distance et en ce que la transmission d'un signal de commande de la deuxième fonction à distance fait suite à une activation intermédiaire de l'organe de commande du dispositif de commande à distance.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- les figures 1A-1B-1C, déjà décrites, représentent un protocole de communication selon l'art antérieur ;
- les figures 2A-2B-2C, représentent un protocole de communication selon un mode de réalisation de la présente invention ;
- la figure 3 représente un système de communication à distance entre un dispositif de communication à distance et un véhicule selon un mode de réalisation de la présente invention ;
- la figure 4 représente le déplacement de fréquence des signaux modulés ;
- la figure 5 représente schématiquement une opération de modulation par déplacement de fréquence synchrone.

### DESCRIPTION DETAILLEE DE L'INVENTION

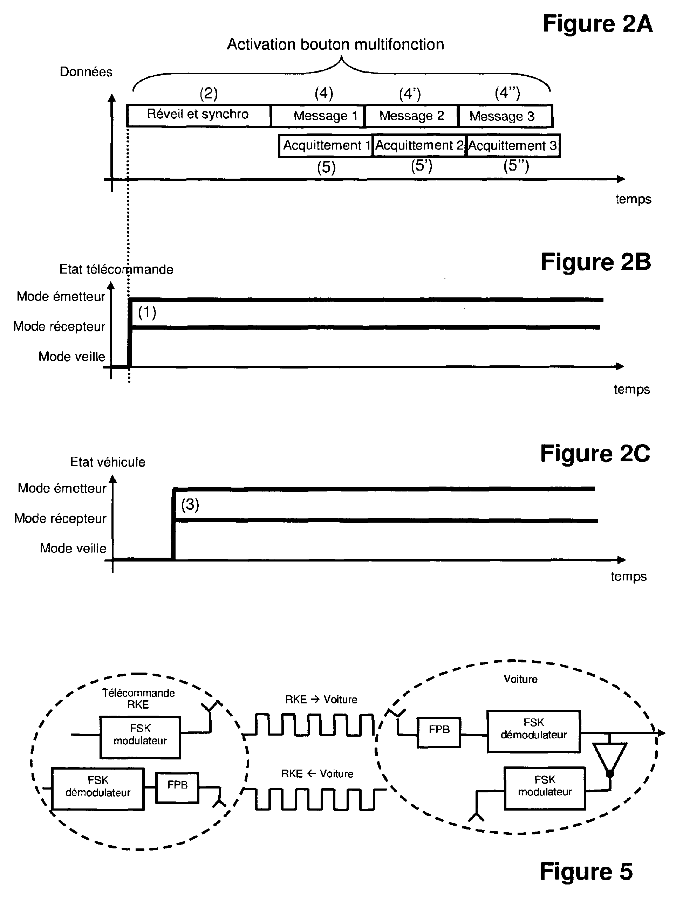

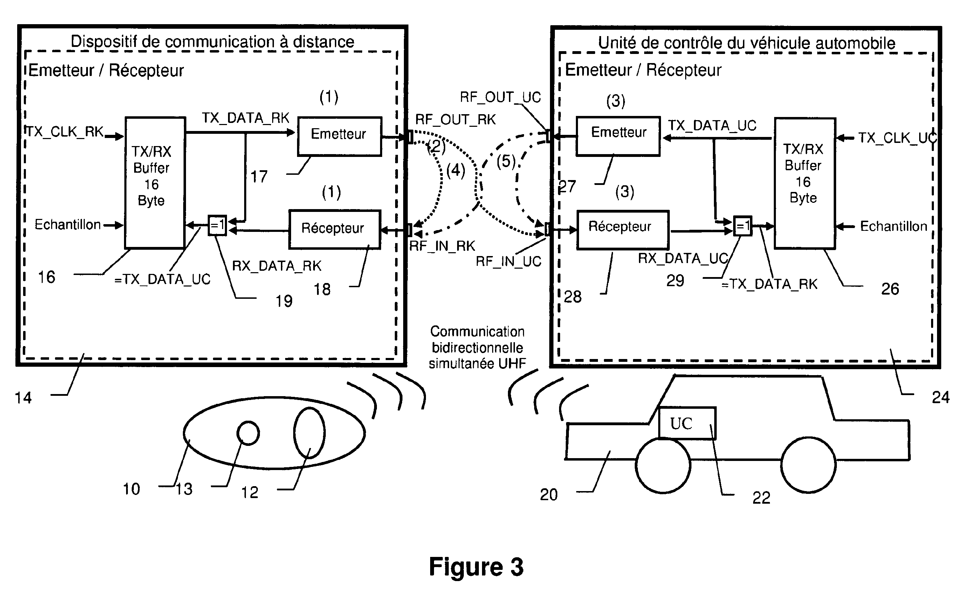

L'invention sera décrite ci-après uniquement à titre d'exemples non limitatifs en relation avec les figures 2A, 2B, 2C et 3. On rappellera tout d'abord que la présente invention concerne un dispositif de commande à distance d'un véhicule, un système de communication comprenant ce dispositif et les moyens de communication du véhicule ainsi qu'un procédé de communication entre les deux. Le but de recherché est de pouvoir cumuler un certain nombre de fonctions sur le dispositif de commande sans multiplier les boutons tout en assurant l'utilisateur en temps réel de la bonne exécution des fonctions demandées.

Pour ce faire, il est prévu d'établir une communication bidirectionnelle simultanée entre le dispositif de communication à distance et le véhicule basée sur une voie unique de transmission, de préférence à très haute fréquence (UHF) pour obtenir une plus grande portée de communication, avec modulation par déplacement de fréquence (FSK) pour permettre la transmission en temps réel de signaux d'acquittement par le véhicule à destination du dispositif de communication à distance. De cette manière, comme cela sera expliqué plus en détail ci-après en liaison avec les figures 2A à 2C, le véhicule accuse réception et exécution de chaque commande reçue par le biais de l'activation plus ou moins longue d'un bouton multifonction du dispositif de communication à distance.

La figure 2A représente la trame complète de communication entre le dispositif de communication à distance et le véhicule. La figure 2B représente le mode de fonctionnement de l'émetteur récepteur du dispositif de communication à distance. La figure 2C représente le mode de fonctionnement de l'émetteur récepteur du véhicule.

Tout d'abord, lors d'une première étape (1, figure 2B), l'émetteur et le récepteur du dispositif de communication à distance sont activés simultanément lors de l'activation d'un organe de commande ou bouton du dispositif. Lors d'une deuxième étape (2, figure 2A) un signal de réveil et de synchronisation est transmis par l'émetteur du dispositif de communication à distance au véhicule. Lors d'une troisième étape (3, figure 2C) l'émetteur et le récepteur du véhicule sont activés simultanément après réception du signal de réveil (2). Ensuite, chaque message (4, 4', 4", figure 2A) est transmis séquentiellement suivant la durée d'activation du bouton multifonction par l'émetteur du dispositif de communication à distance au récepteur du véhicule, tandis que l'émetteur du véhicule transmet simultanément au récepteur du dispositif de commande à distance un signal d'acquittement (5, 5', 5") indiquant la bonne réception et la bonne exécution (lorsque le signal d'acquittement est transmis dans son intégralité) de la fonction demandée. Avantageusement, lorsque le véhicule reçoit un message (4, 4', 4"), l'émetteur transmet simultanément avec un décalage d'un bit le signal d'acquittement de la fonction. Ainsi, chaque bit transmis par l'émetteur du véhicule correspond au signal d'acquittement du bit précédent de celui qui est en cours de transmission par le dispositif au véhicule.

La figure 3 représente un système de communication à distance entre un dispositif de communication à distance et un véhicule selon un mode de réalisation de la présente invention. Le dispositif de communication à distance est de préférence une télécommande 10 ergonomique manipulable avec une seule main et comprenant au moins un bouton multifonction 12 apte à commander plusieurs fonctions, telles que le verrouillage/déverrouillage des ouvrants du véhicule 20, l'ouverture/fermeture des fenêtres des ouvrants, le déploiement/escamotage d'un toit rigide amovible, etc. ainsi que des moyens de signalisation 13 tels qu'une diode électroluminescente multicolore ou encore des moyens d'affichage comme par exemple un écran LCD.

Afin de communiquer entre eux, la télécommande 10 est munie d'un émetteur/récepteur 14 et le véhicule 20 est équipé d'une unité électronique de contrôle 22 (UC) comprenant également un émetteur/récepteur 24. Les deux émetteurs/récepteurs 14 et 24 communiquent au moyen d'une voie unique de transmission bidirectionnelle simultanée. Les fréquences utilisées sont de préférence les ultras hautes fréquences (UHF) comprises entre 300 MHz et 3000 MHz, ce qui assure une communication à large portée en termes de distance entre la télécommande et le véhicule.

Dans l'exemple représenté à la figure 3, l'émetteur/récepteur 14 de la télécommande comprend outre un émetteur 17 et un récepteur 18 en tant que tels, un tampon 16 (ou buffer selon la terminologie anglaise) stockant les signaux à émettre (TX) et les signaux reçus (RX) par la télécommande. Ce tampon 16 reçoit en entrée un signal d'échantillonnage et un signal d'horloge (TX_CLK_RK) pour assurer la synchronisation avec l'émetteur/récepteur 24 de l'unité de contrôle 22. Le tampon fournit en sortie les signaux à émettre (TX_DATA_RK) à l'émetteur 17 qui les transmet ensuite au véhicule par la borne de sortie (RF_OUT_RK). Les signaux de réception (RX_DATA_RK) sont reçus par la borne d'entrée (RF_IN_RK) qui les fournit au récepteur 18. En sortie du récepteur, les signaux reçus (RX_DATA_RK) sont corrélés avec les signaux simultanément émis (TX_DATA_RK) par des moyens de corrélation 19 pour identifier le signal d'acquittement (TX_DATA_UC) transmis par l'unité de contrôle.

De la même manière, l'émetteur/récepteur 24 de l'unité de contrôle du véhicule comprend outre un émetteur 27 et un récepteur 28 en tant que tels, un tampon 26 stockant les signaux à émettre (TX) et les signaux reçus (RX) par l'unité de contrôle. Ce tampon 26 reçoit en entrée un signal d'échantillonnage et un signal d'horloge (TX_CLK_UC) pour assurer la synchronisation avec l'émetteur/récepteur 14 de la télécommande. Le tampon fournit en sortie les signaux à émettre (TX_DATA_UC) à l'émetteur 27 qui les transmet ensuite à la télécommande par la borne de sortie (RF_OUT_UC). Les signaux de réception (RX_DATA_UC) sont reçus par la borne d'entrée (RF_IN_UC) qui les fournit au récepteur 28. En sortie du récepteur les signaux reçus (RX_DATA_UC) sont corrélés avec les signaux simultanément émis (TX_DATA_UC) pour récupérer le signal de commande d'une fonction (TX_DATA_RK) transmis par la télécommande.

L'étape (1) du procédé permet d'activer l'émetteur 17 et le récepteur 18 de la télécommande. Ensuite lors de l'étape (2), un signal de réveil et de synchronisation est transmis à l'unité de contrôle du véhicule. L'étape (3) permet l'activation de l'émetteur 27 et du récepteur 28 de l'unité de contrôle. Lors de l'étape (4), l'émetteur 17 de la télécommande transmet au récepteur 28 de l'unité de contrôle un premier message contenant une fonction à exécuter sur le véhicule. Simultanément lors de l'étape (5), l'émetteur 27 de l'unité de contrôle transmet au récepteur 18 de la télécommande un signal d'acquittement de la fonction reçue. La même chose se répète pour les étapes (4') et (5'), respectivement (4") et (5").

Afin de diminuer les risques de diaphonie ou d'interférences entre les signaux émis et reçus simultanément, les signaux sont modulés par déplacement de fréquence avantageusement avec un écart de +/- 100 KHz minimum autour de la fréquence porteuse F₀, comme cela est représenté à la figure 4. En outre, le circuit intégré supportant l'émetteur/récepteur de la télécommande présente une bonne isolation radiofréquence. On choisira avantageusement une isolation d'au moins 30 dB. La figure 5 représente schématiquement une opération de modulation par déplacement de fréquence synchrone. Du côté de la télécommande RKE ou « Remote Keyless Entry » selon la terminologie anglaise, le modulateur FSK permet de transmettre des données au véhicule avec une première fréquence. Le codage utilisé sera par exemple du code Manchester. Le démodulateur FSK recevra en réponse après passage dans un filtre passe bande (FPB) à bande passante étroite, un signal d'acquittement modulé à une fréquence décalée et utilisant le même codage de sorte à être synchrone avec les signaux transmis. De la même manière, du côté du véhicule on trouve un modulateur et un démodulateur FSK ainsi qu'un filtre FPB, les signaux transmis par le démodulateur FSK du véhicule étant de préférence inversés.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de commande à distance (10) pour véhicule, le dispositif comprenant au moins un organe de commande multifonction (12) pour commander une première fonction à distance sur le véhicule (20) et au moins une deuxième fonction à distance sur le véhicule, des moyens de communication (17, 18) avec le véhicule pour transmettre un signal de commande (TX_DATA_RK) de l'une et/ou l'autre des fonctions à distance en cas d'activation de l'organe de commande et pour recevoir un signal d'acquittement (TX_DATA_UC) indiquant l'exécution de l'une et/ou l'autre des fonctions à distance et des moyens de signalisation (13) de la réception du signal d'acquittement, **caractérisé en ce que** les moyens de communication sont des moyens de transmission bidirectionnelle simultanée entre le dispositif de commande à distance et le véhicule utilisant une voie unique de transmission avec modulation par déplacement de fréquence des signaux de commande et d'acquittement échangés.

2. Dispositif de commande à distance selon la revendication 1, **caractérisé en ce que** le signal d'acquittement (TX_DATA_UC) est reçu simultanément au signal de commande (TX_DATA_RK) de la fonction à distance correspondant.

3. Dispositif de commande à distance selon la revendication 2, **caractérisé en ce que** le signal d'acquittement (TX_DATA_UC) est décalé d'un bit par rapport au signal de commande (TX_DATA_RK) correspondant.

4. Dispositif de commande à distance selon l'une des revendications 1 à 3, **caractérisé en ce que** le décalage de fréquence pour la modulation est au moins de 100 KHz.

5. Dispositif de commande à distance selon l'une des revendications 1 à 4, dans lequel les moyens de communication comprennent une partie émettrice et une partie réceptrice, **caractérisé en ce que** des moyens d'isolation sont prévus entre les parties émettrice et réceptrice.

6. Dispositif de commande à distance selon la revendication 5, **caractérisé en ce que** les moyens d'isolation assurent une isolation supérieure à 30 dB entre les parties émettrice et réceptrice.

7. Dispositif de commande à distance selon la revendication 1, **caractérisé en ce que** l'organe de commande multifunction est apte à commander les différentes fonctions à distance suivant son temps d'activation, la première fonction étant commandée par une activation courte et la deuxième fonction étant commandée par une activation intermédiaire plus longue que l'activation courte.

8. Dispositif de commande à distance selon la revendication 7, **caractérisé en ce que** la première fonction est une fonction de verrouillage ou déverrouillage d'un ouvrant du véhicule et la deuxième fonction est une fonction de fermeture ou ouverture d'une fenêtre de l'ouvrant.

9. Dispositif de commande à distance selon la revendication 7 ou 8, **caractérisé en ce que** l'organe de commande multifonction est apte à commander en outre une troisième fonction pour un temps d'activation prolongée plus long que le temps d'activation intermédiaire.

10. Dispositif de commande à distance selon la revendication 9, **caractérisé en ce que** la troisième fonction est une fonction de déploiement ou d'escamotage d'un toit rigide du véhicule.

11. Système de commande à distance d'un véhicule comprenant un dispositif de commande à distance selon l'une des revendications 1 à 10, et un véhicule équipé d'un émetteur récepteur apte à communiquer avec les moyens de communication du dispositif de commande à distance.

12. Procédé de communication d'un système de commande à distance selon la revendication 11, comprenant les étapes consistant à :
- transmettre au véhicule sur une voie unique de transmission un signal de commande d'une première fonction à distance par le biais des moyens de communication du dispositif de commande à distance ;
- transmettre simultanément au dispositif de commande à distance sur la voie unique de transmission un signal d'acquittement de l'exécution de la première fonction modulé par déplacement de fréquence par le biais des moyens de communication du véhicule ;
- signaler l'acquittement de la première fonction au niveau du dispositif de commande à distance ;
- transmettre au véhicule sur la voie unique de transmission un signal de commande d'une deuxième fonction à distance par le biais des moyens de communication du dispositif de commande à distance ;
- transmettre simultanément au dispositif de commande à distance sur la voie unique de transmission un signal d'acquittement de l'exécution de la deuxième fonction modulé par déplacement de fréquence par le biais des moyens de communication du véhicule ;
- signaler l'acquittement de la deuxième fonction au niveau du dispositif de commande à distance.

13. Procédé de communication selon la revendication 12, **caractérisé en ce que** la transmission d'un signal de commande de la première fonction à distance fait suite à une activation courte de l'organe de commande du dispositif de commande à distance et **en ce que** la transmission d'un signal de commande de la deuxième fonction à distance fait suite à une activation intermédiaire de l'organe de commande du dispositif de commande à distance.

## Patentansprüche

1. Fernsteuerungsvorrichtung (10) für ein Fahrzeug, wobei die Vorrichtung zumindest ein Multifunktionssteuerglied (12) zur Fernsteuerung einer ersten Funktion am Fahrzeug (20) und zur Fernsteuerung zumindest einer zweiten Funktion am Fahrzeug sowie Kommunikationsmittel (17, 18) zur Kommunikation mit dem Fahrzeug enthält, um ein Steuersignal (TX_DATA_RK) zum Steuern der einen und/oder der anderen Fernsteuerungsfunktion bei Aktivierung des Steuerglieds zu übertragen und ein Quittierungssignal (TX_DATA_UC) zu empfangen, das die Ausführung der einen und/oder anderen Fernsteuerungsfunktion angibt, sowie Signalmittel (13) zum Melden des Empfangs des Quittierungssignals, **dadurch gekennzeichnet, dass** die Kommunikationsmittel Übertragungsmittel zur gleichzeitigen bidirektionalen Übertragung zwischen der Fernsteuerungsvorrichtung und dem Fahrzeug sind, die einen einzigen Übertragungskanal mit Frequenzmodulation mit Frequenzumtastung des ausgetauschten Steuer- und Quittierungssignals verwenden.

2. Fernsteuerungsvorrichtung nach Anspruch 1, **dadurch gekennzeichnet, dass** das Quittierungssignal (TX_DATA_UC) gleichzeitig mit dem Steuersignal (TX_DATA_RK) der entsprechenden Fernsteuerungsfunktion empfangen wird.

3. Fernsteuerungsvorrichtung nach Anspruch 2, **dadurch gekennzeichnet, dass** das Quittierungssignal (TX_DATA_UC) bezüglich des entsprechenden Steuersignals (TX_DATA_RK) um ein Bit verschoben ist.

4. Fernsteuerungsvorrichtung nach einem der Ansprüche 1 bis 3, **dadurch gekennzeichnet, dass** die Frequenzverschiebung für die Modulation zumindest 100 KHz beträgt.

5. Fernsteuerungsvorrichtung nach einem der Ansprüche 1 bis 4, wobei die Kommunikationsmittel ein Senderteil und ein Empfängerteil aufweisen, **dadurch gekennzeichnet, dass** zwischen dem Sender- und dem Empfängerteil Isoliermittel vorgesehen sind.

6. Fernsteuerungsvorrichtung nach Anspruch 5, **dadurch gekennzeichnet, dass** die Isoliermittel eine Isolierung von über 30 dB zwischen dem Sender- und dem Empfängerteil gewährleisten.

7. Fernsteuerungsvorrichtung nach Anspruch 1, **dadurch gekennzeichnet, dass** das Multifunktionssteuerglied dazu geeignet ist, die verschiedenen Fernsteuerungsfunktionen je nach seiner Aktivierungszeit zu steuern, wobei die erste Funktion durch eine Kurzaktivierung und die zweite Funktion durch eine Zwischenaktivierung gesteuert wird, die länger als die Kurzaktivierung ist.

8. Fernsteuerungsvorrichtung nach Anspruch 7, **dadurch gekennzeichnet, dass** die erste Funktion eine Ver- bzw. Entriegelungsfunktion zum Ver- bzw. Entriegeln eines Schließteils von dem Fahrzeug ist und dass die zweite Funktion eine Schließ- bzw. Öffnungsfunktion zum Schließen bzw. Öffnen eines Fensters des Schließteils ist.

9. Fernsteuerungsvorrichtung nach Anspruch 7 oder 8, **dadurch gekennzeichnet, dass** das Multifunktionssteuerglied dazu geeignet ist, ferner eine dritte Funktion bei einer verlängerten Aktivierungszeit zu steuern, die länger als die Zwischenaktivierungszeit ist.

10. Fernsteuerungsvorrichtung nach Anspruch 9, **dadurch gekennzeichnet, dass** die dritte Funktion eine Aus- oder Einfahrfunktion zum Aus- oder Einfahren eines starren Daches des Fahrzeugs ist.

11. Fernsteuerungssystem für ein Fahrzeug mit einer Fernsteuerungsvorrichtung nach einem der Ansprüche 1 bis 10 und mit einem Fahrzeug, das mit einem Sender/Empfänger ausgestattet ist, der dazu geeignet ist, mit den Kommunikationsmitteln der Fernsteuerungsvorrichtung zu kommunizieren.

12. Kommunikationsverfahren zur Kommunikation mit einem Fernsteuerungssystem nach Anspruch 11, das die nachfolgenden Schritte umfasst:
- Übertragen eines Steuersignals einer ersten Fernsteuerungsfunktion an das Fahrzeug auf einem einzigen Übertragungskanal mit Hilfe der Kommunikationsmittel der Fernsteuerungsvorrichtung;
- gleichzeitiges Übertragen eines Quittierungssignals zum Quittieren der Ausführung der ersten Funktion an die Fernsteuerungsvorrichtung auf dem einzigen Übertragungskanal, welches Signal mit Frequenzumtastung frequenzmoduliert ist, mit Hilfe der Kommunikationsmittel des Fahrzeugs;
- Melden der Quittierung der ersten Funktion im Bereich der Fernsteuerungsvorrichtung;
- Übertragen eines Steuersignals einer zweiten Fernsteuerungsfunktion an das Fahrzeug auf dem einzigen Übertragungskanal mit Hilfe der Kommunikationsmittel der Fernsteuerungsvorrichtung;
- gleichzeitiges Übertragen eines Quittierungssignals zum Quittieren der Ausführung der zweiten Funktion an die Fernsteuerungsvorrichtung auf dem einzigen Übertragungskanal, welches Signal mit Frequenzumtastung frequenzmoduliert ist, mit Hilfe der Kommunikationsmittel des Fahrzeugs;
- Melden der Quittierung der zweiten Funktion im Bereich der Fernsteuerungsvorrichtung.

13. Kommunikationsverfahren nach Anspruch 12, **dadurch gekennzeichnet, dass** die Übertragung eines Fernsteuersignals der ersten Funktion nach einer kurzen Aktivierung des Steuerglieds der Fernsteuerungsvorrichtung erfolgt und dass die Übertragung eines Fernsteuersignals der zweiten Funktion nach einer Zwischenaktivierung des Steuerglieds der Fernsteuerungsvorrichtung erfolgt.

## Claims

1. Remote control device (10) for vehicle, the device comprising at least one multifunction control organ (12) to control a first remote function of the vehicle (20) and at least a second remote function of the vehicle, communication means (17, 18) with the vehicle to transmit a control signal (TX_DATA_RK) of one and/or the other of the remote functions in case of activation of the control organ and to receive an acknowledgement signal (TX_DATA_UC) indicating the execution of the one and/or the other of the remote functions and means for signalling (13) the reception of the acknowledgement signal, **characterised by** the fact that the communication means are simultaneous bidirectional transmission means between the remote control device and the vehicle using a single transmission channel with frequency shift modulation of the control and acknowledgement exchanges.

2. Remote control device as described in claim 1, **characterised by** the fact that the acknowledgement signal (TX_DATA_DC) is received simultaneously with the control signal (TX_DATA_RK) of the corresponding remote function.

3. Remote control device as described in claim 2, **characterised by** the fact that the acknowledgement signal (TX_DATA_UC) is shifted by one bit relative to the corresponding control signal (TX_DATA_RK).

4. Remote control device as described in one of claims 1 to 3, **characterised by** the fact that the frequency shift for the modulation is at least of 100 kHz.

5. Remote control device as described in one of claims 1 to 4, in which the communication means comprise a transmitting part and a receiving part, **characterised by** the fact that isolation means are provided between the transmitting and receiving parts.

6. Remote control device as described in claim 5, **characterised by** the fact that the isolation means provide an isolation of greater than 30 dB between the transmitting and receiving parts.

7. Remote control device as described in claim 1, **characterised by** the fact that the multifunction control organ is able to control the different remote functions according to its activation time, the first function being controlled by a short activation and the second function being controlled by an intermediate activation longer than the short activation.

8. Remote control device as described in claim 7, **characterised by** the fact that the first function is a function of locking or unlocking of a door of the vehicle and the second function is a function of closure or opening of a window of the door.

9. Remote control device as described in claim 7 or 8, **characterised by** the fact that the multifunction control organ is able to also control a third function for an extended activation time longer than the intermediate activation time.

10. Remote control device as described in claim 9, **characterised by** the fact that the third function is a function of deployment or retraction of a hard roof of the vehicle.

11. Remote control system of a vehicle comprising a remote control device as described in one of claims 1 to 10, and a vehicle fitted with a transceiver able to communicate with the communication means of the remote control device.

12. Communication process of a remote control system as described in claim 11, comprising the steps consisting of:
- transmitting to the vehicle on a single transmission channel a control signal of a first remote function by means of the communication means of the remote control device;
- simultaneously transmitting to the remote control device on the single transmission channel an acknowledgement signal of the execution of the first function modulated by frequency shift by means of the communication means of the vehicle;
- signalling the acknowledgement of the first function at the remote control device;
- transmitting to the vehicle on the single transmission channel a control signal of a second remote function by means of the communication means of the remote control device;
- transmitting simultaneously to the remote control device on the single transmission channel a signal of acknowledgement of the execution of the second function modulated by frequency shift by means of the communication means of the vehicle;
- signalling the acknowledgement of the second function at the remote control device.

13. Communication process as described in claim 12, **characterised by** the fact that the transmission of a control signal of the first remote function follows a short activation of the control organ of the remote control device and by the fact that the transmission of a control signal of the second remote function follows an intermediate activation of the control organ of the remote control device.
